# EUROPÄISCHE PATENTANMELDUNG

(11) **EP 3 679 800 A1**
(43) Veröffentlichungstag der Anmeldung: **15.07.2020**
(21) Anmeldenummer: 19150976.9
(22) Anmeldetag: 09.01.2019
(51) Int. Cl.: A21C 15/00, A47J 43/16

(54) **VORRICHTUNG ZUM BEFÜLLEN VON BROTTASCHEN**

(71) Anmelder: Polat Dönerproduktion GmbH, 41066 Mönchengladbach (DE)
(72) Erfinder: Peterkes, Christian, 41066 Mönchengladbach (DE)
(74) Vertreter: Leifert & Steffan Patentanwälte PartG mbB

(57) **Zusammenfassung**

Die vorliegende Erfindung betrifft eine Vorrichtung (1) zur zumindest teilweisen Befüllung von Brottaschen mit einem oder mehreren Lebensmittel(n), wobei die Vorrichtung (1) einen ebenen Grundkörper (2) umfasst, der an zwei sich gegenüberliegenden und parallel zueinander angeordneten Seiten (3) und (4) jeweils über die gesamte Länge L jeder dieser Seiten (3) und (4) eine seitliche Erhöhung (5) aufweist, der zudem eine zentrale Fläche (6) beinhaltet, die durch die Länge L der beiden seitlichen Erhöhungen (5) und durch den Abstand A der beiden Erhöhungen (5) voneinander definiert ist, und so ausgestaltet ist, dass er einen Griff (7) und/oder eine Aussparung (8) aufweist, eine Verwendung dieser Vorrichtung zur zumindest teilweisen Befüllung von Brottaschen mit einem oder mehreren Lebensmittel(n), ein Verfahren zur zumindest teilweisen Befüllung von Brottaschen mit einem oder mehreren Lebensmittel(n) umfassend wenigstens einen Schritt (1) sowie ein Kit-ofparts umfassend eine Vorrichtung (1) und eine Brottasche, die zur zumindest teilweisen Aufnahme einer mit einem oder mehreren Lebensmittel(n) befüllten Vorrichtung (1) geeignet ist.

## Beschreibung

Die vorliegende Erfindung betrifft eine Vorrichtung (1) zur zumindest teilweisen Befüllung von Brottaschen mit einem oder mehreren Lebensmittel(n), wobei die Vorrichtung (1) einen ebenen Grundkörper (2) umfasst, der an zwei sich gegenüberliegenden und parallel zueinander angeordneten Seiten (3) und (4) jeweils über die gesamte Länge L jeder dieser Seiten (3) und (4) eine seitliche Erhöhung (5) aufweist, der zudem eine zentrale Fläche (6) beinhaltet, die durch die Länge L der beiden seitlichen Erhöhungen (5) und durch den Abstand A der beiden Erhöhungen (5) voneinander definiert ist, und so ausgestaltet ist, dass er einen Griff (7) und/oder eine Aussparung (8) aufweist, eine Verwendung dieser Vorrichtung zur zumindest teilweisen Befüllung von Brottaschen mit einem oder mehreren Lebensmittel(n), ein Verfahren zur zumindest teilweisen Befüllung von Brottaschen mit einem oder mehreren Lebensmittel(n) umfassend wenigstens einen Schritt (1) sowie ein Kit-of-parts umfassend eine Vorrichtung (1) und eine Brottasche, die zur zumindest teilweisen Aufnahme einer mit einem oder mehreren Lebensmittel(n) befüllten Vorrichtung (1) geeignet ist.

### Stand der Technik

Der Döner Kebab (türkisch: "(sich) drehendes Grillfleisch") ist eines der bekanntesten Gerichte der türkischen Küche. Es besteht üblicherweise aus mit Marinade gewürzten Fleischscheiben, die schichtweise auf einen senkrecht stehenden Drehspieß gesteckt und seitlich gegrillt werden. Von diesem werden nach und nach die äußeren, gebräunten Schichten dünn abgeschnitten. Serviert wird Döner oftmals in einem aufgeschnittenen Fladenbrot. Dabei wird das Fleisch üblicherweise manuell zusammen mit weiteren Zutaten wie Salat, Rohkost und Soße in das Fladenbrot platziert und dem Kunden übergeben.

Nachteilig an diesem üblichen Procedere des Servierens eines Döners ist oftmals, dass im Zuge des Essvorgangs seitens des Kunden unerwünscht Teile der in dem Fladenbrot enthaltenen Zutaten, insbesondere die Soße und/oder mit Soße versehende Bestandteile des Döners, auf die Kleidung und/oder Körperteile des Kunden fallen und/oder austreten können, und diese beschmutzen. Dies gilt insbesondere dann, wenn sich der Kunde den Döner in einem Imbiss kauft und diesen dann mitnimmt, um ihn unterwegs und während des Laufens zu essen. Ferner ist nachteilig, dass man üblicherweise während des Essvorgangs beide Hände benötigt, um die vorgenannte Beschmutzung möglichst gering zu halten. Des Weiteren ist der Einsatz beider Hände oftmals allein aufgrund der vergleichsweise großen Fläche der üblicherweise eingesetzten aufgeschnittenen Fladenbrote notwendig.

Nachteilig an dem üblichen Procedere der Zubereitung eines Döners, insbesondere in einem Dönerimbiss, ist der, dass es nicht immer zu einer ausreichenden Vermischung aller Bestandteile des Döners innerhalb des Fladenbrots kommt und kommen kann, da oftmals das Dönerfleisch direkt in das aufgeschnittene Fladenbrot gefüllt wird und im Anschluss dann die weiteren Zutaten auf das Fleisch "geschichtet" werden, beispielsweise zunächst Salat und Rohkost und im Anschluss Soße. Dies führt oftmals dazu, dass man beim Essen des Döners zunächst nur eine Kombination aus Salat, Soße und Brot zu sich nimmt und nehmen kann und im weiteren Verlauf dann nur eine Mischung aus Fleisch und Brot und so zumindest nicht während des gesamten Essvorgangs in den Genuss einer homogenen Mischung aller eingesetzten Bestandteile des Döners kommt.

Es besteht daher ein Bedarf an einer Darreichungsform einer Döners, welche die vorgenannten Nachteile nicht aufweist.

### Aufgabe

Eine Aufgabe der vorliegenden Erfindung ist es daher, eine Darreichungsform bzw. Zubereitungsform eines Döners zur Verfügung stellen zu können, die die vorgenannten Nachteile nicht aufweist, die durch die im Stand der Technik bekannten Darreichungs- und Zubereitungsformen hervorgerufen werden. Insbesondere ist es eine Aufgabe der vorliegenden Erfindung, eine Darreichungsform bzw. Zubereitungsform eines Döners bereitstellen zu können, die eine homogene Durchmischung aller Bestandteile des Döners wie Salat, Soße und Fleisch an jeder Position der Darreichungsform bzw. Zubereitungsform ermöglicht, während des gesamten Essvorgangs den Genuss einer homogenen Mischung aller Bestandteile des Döners erlaubt, und mittels derer zudem eine unerwünschte Beschmutzung von Bekleidung und/oder Körperteilen durch austretende und/oder herausfallende Bestandteile aus der Darreichungsform bzw. Zubereitungsform des Döners zumindest reduziert oder aber ganz vermieden werden kann.

### Lösung

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist eine Vorrichtung (1) zur zumindest teilweisen Befüllung von Brottaschen mit einem oder mehreren Lebensmittel(n), insbesondere zur zumindest teilweisen Befüllung von Brottaschen mit Dönerfleisch, vorzugsweise in Kombination mit einem oder mehreren weiteren Lebensmittel(n), wobei die Vorrichtung (1)
einen ebenen Grundkörper (2) umfasst, der an zwei sich gegenüberliegenden und parallel zueinander angeordneten Seiten (3) und (4) jeweils über die gesamte Länge L jeder dieser Seiten (3) und (4) eine seitliche Erhöhung (5) aufweist,
der ebene Grundkörper (2) eine zentrale Fläche (6) beinhaltet, die durch die Länge L der beiden seitlichen Erhöhungen (5) und durch den Abstand A der beiden Erhöhungen (5) voneinander definiert ist, und
der ebene Grundkörper (2) so ausgestaltet ist, dass er einen Griff (7) und/oder eine Aussparung (8) aufweist.

Ein weiterer Gegenstand der vorliegenden Erfindung ist eine Verwendung der erfindungsgemäßen Vorrichtung (1) zur zumindest teilweisen Befüllung von Brottaschen mit einem oder mehreren Lebensmittel(n), insbesondere zur zumindest teilweisen Befüllung von Brottaschen mit Dönerfleisch, vorzugsweise in Kombination mit einem oder mehreren weiteren Lebensmittel(n).

Ein weiterer Gegenstand der vorliegenden Erfindung ist ein Verfahren zur zumindest teilweisen Befüllung von Brottaschen mit einem oder mehreren Lebensmittel(n) umfassend wenigstens einen Schritt (1), nämlich
(1) zumindest teilweise Befüllung wenigstens einer Brottasche mit einem oder mehreren Lebensmittel(n) unter Einsatz der erfindungsgemäßen Vorrichtung (1).

Schließlich ist ein weiterer Gegenstand der vorliegenden Erfindung ein Kit-of-parts umfassend eine erfindungsgemäße Vorrichtung (1) und eine Brottasche, die zur zumindest teilweisen Aufnahme einer mit einem oder mehreren Lebensmittel(n) befüllten erfindungsgemäßen Vorrichtung (1) geeignet ist.

Es wurde überraschend gefunden, dass es die erfindungsgemäße Vorrichtung (1) ermöglicht, mit einem oder mehreren Lebensmittel(n), insbesondere mit Dönerfleisch, vorzugsweise in Kombination mit einem oder mehreren weiteren Lebensmittel(n), befüllte Brottaschen als Darreichungsform bzw. Zubereitungsform eines Döners zur Verfügung stellen zu können, die sich dadurch auszeichnen, dass innerhalb der Brottasche eine homogene Mischung aller eingesetzten Bestandteile an jeder Position vorliegt. Dadurch wird während des gesamten Essvorgangs der Genuss einer homogenen Mischung aller Bestandteile des Döners zu jedem Zeitpunkt ermöglicht.

Es wurde ferner überraschend gefunden, dass es die erfindungsgemäße Vorrichtung (1) ermöglicht, mit einem oder mehreren Lebensmittel(n), insbesondere mit Dönerfleisch, vorzugsweise in Kombination mit einem oder mehreren weiteren Lebensmittel(n), befüllte Brottaschen als Darreichungsform bzw. Zubereitungsform eines Döners zur Verfügung stellen zu können, mittels derer beim Essvorgang eine unerwünschte Beschmutzung von Bekleidung und/oder Körperteilen durch austretende und/oder herausfallende Bestandteile aus der Darreichungsform bzw. Zubereitungsform eines Döners zumindest reduziert oder aber ganz vermieden werden kann.

### Ausführliche Beschreibung

### Erfindungsgemäße Vorrichtung

Ein erster Gegenstand der vorliegenden Erfindung ist eine Vorrichtung (1) zur zumindest teilweisen Befüllung von Brottaschen mit einem oder mehreren Lebensmittel(n), wobei die Vorrichtung (1)
einen ebenen Grundkörper (2) umfasst, der an zwei sich gegenüberliegenden und parallel zueinander angeordneten Seiten (3) und (4) jeweils über die gesamte Länge L jeder dieser Seiten (3) und (4) eine seitliche Erhöhung (5) aufweist,
der ebene Grundkörper (2) eine zentrale Fläche (6) beinhaltet, die durch die Länge L der beiden seitlichen Erhöhungen (5) und durch den Abstand A der beiden Erhöhungen (5) voneinander definiert ist, und
der ebene Grundkörper (2) so ausgestaltet ist, dass er einen Griff (7) und/oder eine Aussparung (8) aufweist.

Vorzugsweise ist die erfindungsgemäße Vorrichtung (1) zur zumindest teilweisen Befüllung von Brottaschen mit Dönerfleisch, vorzugsweise in Kombination mit einem oder mehreren weiteren Lebensmittel(n), geeignet.

Die eingesetzte Brottasche ist vorzugsweise eine dreiseitig verschlossene Brottasche, d.h. eine Brottasche, die vorzugsweise genau eine Öffnung aufweist, in die die erfindungsgemäße Vorrichtung (1) eingeführt werden kann. Vorzugsweise hat die eingesetzte Brottasche eine weitestgehend rechteckige, besonders bevorzugt eine rechteckige Form. Die eingesetzte Brottasche ist grundsätzlich aus jeder Art von Brot herstellbar. Nachdem das Brot gebacken worden ist, wird es vorzugsweise an einer Seite in seiner Breite aufgeschnitten oder es wird der Knust des Brotes entfernt. Auf diese Art und Weise kann eine dreiseitig verschlossene Brottasche mit genau einer Öffnung erhalten werden. Es ist möglich, die so einseitig geöffnete Brottasche direkt zwecks Befüllung einzusetzen. Es ist aber ebenfalls möglich, die Brottasche optional einer partiellen Aushöhlung nach ihrer einseitigen Öffnung zu unterwerfen, um das Volumen innerhalb der Brottasche zu vergrößern und die Einführung der erfindungsgemäßen Vorrichtung in die Brottasche weiter zu erleichtern.

Grundsätzlich können Lebensmittel jeder Art zur Befüllung der Brottasche eingesetzt werden. Vorzugsweise wird die Vorrichtung (1) zur zumindest teilweisen Befüllung von Brottaschen mit Dönerfleisch, vorzugsweise in Kombination mit einem oder mehreren weiteren Lebensmittel(n) eingesetzt. Jede Art von Dönerfleisch kann eingesetzt werden. Bespiele sind Hammel- oder Lammfleisch, Kalb- oder Rindfleisch und Geflügelfleisch wie Puten- oder Hähnchenfleisch. Ein entsprechender Dönerspieß kann zudem Hackfleisch enthalten. Das Dönerfleisch wird dabei vorzugsweise nach Herunterschneiden vom Dönerspieß vor Ort in einem DönerImbiss oder einem Döner-Restaurant zur Befüllung eingesetzt. Die ein oder mehreren weiteren Lebensmittel, die vorzugsweise zusammen mit dem Dönerfleisch zur Befüllung eingesetzt werden, sind vorzugsweise ausgewählt aus der Gruppe umfassend übliche Zutaten, die zusammen mit einem Döner verkauft werden, insbesondere eine oder mehrere Soße(n), Salat wie Eisbergsalat und/oder Krautsalat, Rohkost wie, Gurke, Tomaten etc. und Käse wie Fetakäse. Auch der zusätzliche Einsatz von Pommes Frites und/oder Reis ist denkbar.

Die erfindungsgemäße Vorrichtung (1) eignet sich wie vorstehend ausgeführt zur zumindest teilweisen Befüllung von Brottaschen mit einem oder mehreren Lebensmittel(n). Die Vorrichtung (1) wird dabei zunächst mit dem oder den Lebensmitteln beladen und im dann befüllten Zustand in die hierfür vorgesehene Brottasche hineingeschoben. Aus diesem Grund kann die erfindungsgemäße Vorrichtung (1) auch als Schlitten oder Befüllschlitten bezeichnet werden.

Grundsätzlich kann jedes Material zur Herstellung des Grundkörpers (2) einschließlich seiner seitlichen Erhöhungen (5) bzw. zur Herstellung der gesamten Vorrichtung (1) eingesetzt werden, solange das Material im Lebensmittelbereich einsetzbar ist, d.h. in Kontakt mit Lebensmitteln gebracht werden kann und darf. Vorzugsweise besteht der Grundkörper (2) einschließlich seiner seitlichen Erhöhungen (5) aus wenigstens einem Metall und/oder aus wenigstens einer Metalllegierung. Vorzugsweise besteht die gesamte Vorrichtung (1) aus wenigstens einem Metall und/oder aus wenigstens einer Metalllegierung. Vorzugsweise besteht der Grundkörper (2) einschließlich seiner seitlichen Erhöhungen (5), insbesondere die gesamte Vorrichtung (1) aus Stahl, insbesondere aus Edelstahl.

Vorzugsweise ist die Vorrichtung (1) ganzheitlich aus einem Material und aus genau einem Werkstück gefertigt ist. Hierzu kann beispielsweise ein Stahlblech wie ein kommerziell erhältliches Edelstahlblech als Werkstück eingesetzt werden.

Vorzugsweise weist jede der Seiten (3) und (4) des Grundkörpers eine Länge L auf, die mindestens 90% des Abstands A entspricht. Die Länge L kann den Abstand A übersteigen, muss jedoch nicht.

Die Länge der beiden Seiten (3) und (4) des Grundkörpers (2) ist vorzugsweise identisch. Die Länge der beiden seitlichen Erhöhungen (5) des Grundkörpers (2) ist vorzugsweise auf jeder der beiden Seiten (3) und (4) des Grundkörpers (2) ebenfalls identisch. Die Länge L der beiden Seiten (3) und (4) des Grundkörpers (2) liegt vorzugsweise in einem Bereich von 10 bis 20 cm, insbesondere von 10 bis 15 cm, ganz besonders bevorzugt von 11 bis 14 cm. Der Abstand A liegt vorzugsweise in einem Bereich von 5 bis 15 cm, insbesondere von 6 bis 15 cm, ganz besonders bevorzugt von 7 bis 14 cm.

Vorzugsweise stellt der ebene Grundkörper (2) eine Platte dar. Vorzugsweise weist der Grundkörper (2) und auch die Vorrichtung (1) selbst abgesehen von den beiden seitlichen Erhöhungen (5) keine weiteren Erhöhungen auf.

Die beiden seitlichen Erhöhungen (5) stellen jeweils einen an jeder der Seiten (3) und (4) des Grundkörpers (2) befindlichen Rand dar, durch den die Fläche (6) eingeschlossen wird und durch den die Fläche (6) zumindest teilweise definiert wird, nämlich mittels der Länge L. Durch die beiden Seiten (3) und (4) bzw. durch die ausgestalteten Erhöhungen (5) und durch die Seite (9), die nachstehend weiter beschrieben wird, wird vorzugsweise auch der Grundkörper (2) selbst begrenzt. Vorzugsweise ist der Grundkörper (2) so ausgestaltet, dass die seitlichen Erhöhungen (5) jeweils in einem Winkel zur Fläche (6) angeordnet sind, der in einem Bereich von 85 bis 95° liegt. Besonders bevorzugt ist der Grundkörper (2) so ausgestaltet, dass die seitlichen Erhöhungen (5) jeweils in einem Winkel von 90° ±1°, insbesondere von 90°, zur Fläche (6) angeordnet sind.

Vorzugsweise weist der Grundkörper (2) neben den zwei sich gegenüberliegenden und parallel zueinander angeordneten Seiten (3) und (4) zwei weitere Seiten (9) und (10) auf, die sich ebenfalls gegenüberliegen und parallel zueinander angeordnet sind. Jede der Seiten (9) und (10) ist vorzugsweise orthogonal zu jeder der Seiten (3) und (4) angeordnet. Vorzugsweise stellen wenigstens die beiden Seiten (3) und (4) bzw. die beiden seitlichen Erhöhungen (5) und die Seite (9) seitliche Begrenzungen des Grundkörpers (2) und vorzugsweise der gesamten Vorrichtung (1) dar. Die Länge der Seite (9) ist dabei etwas größer als der Abstand A der beiden Erhöhungen (5) voneinander, da die Erhöhungen (5) jeweils eine bestimmte Dicke D2 aufweisen. Die Länge der Seite (9) stellt dann die Summe aus dem Abstand A und zweimal der Dicke D2 dar. Gleiches gilt für die Seite (10): auch die Länge der Seite (10) ist aus den gleichen Gründen etwas größer als der Abstand A der beiden Erhöhungen (5) voneinander.

Der Flächeninhalt der zentralen Fläche (6) ergibt sich aus Multiplikation der Länge L mit dem Abstand A. Die Fläche (6) kann sowohl quadratisch (wenn A = L) als auch rechteckig sein (wenn A ≠ L, insbesondere wenn A < L, aber auch wenn A > L). Vorzugsweise ist die Fläche (6) rechteckig.

Wie vorstehend dargelegt sind die beiden Seiten (3) und (4) des Grundkörpers (2) parallel zueinander angeordnet. Die beiden Erhöhungen (5), die an jeder der beiden Seiten (3) und (4) befindlich sind, weisen einen Abstand A voneinander auf.

Die beiden seitlichen Erhöhungen (5) weisen vorzugsweise jeweils eine Höhe H auf. Es ist möglich, dass die Höhe H über die gesamte Länge L der Erhöhungen (5) gleich gewählt ist. Es ist jedoch auch möglich und zudem bevorzugt, dass die Höhe H über die gesamte Länge L der Erhöhungen (5) nicht gleich gewählt ist. Unterschiedliche Werte der Höhe H können beispielsweise durch seitliche Abrundungen der Erhöhungen (5) erzielt werden. In diesem Fall ist die Höhe H ausgehend von der Mitte der Erhöhung (5), d.h. von der Mitte jeder der Seiten (3) und (4), beispielsweise in beide Richtungen zunächst gleichbleibend, beispielsweise über eine Länge von 50 bis 90% oder bis 95 %, bezogen auf die gesamte Länge L. Ab dann erfolgt eine seitliche Abrundung der Erhöhung (5) - vorzugsweise jeweils auf beiden Seiten - was zu einer Verringerung der Höhe H an diesen Positionen führt. Vorzugsweise ist die Höhe H der beiden seitlichen Erhöhungen (5) des Grundkörpers (2) auf jeder der beiden Seiten (3) und (4) identisch.

Vorzugsweise beträgt die Höhe H der beiden seitlichen Erhöhungen (5) höchstens 2,5 cm. Die Höhe wird dabei von der ebenen Fläche (6) ausgehend berechnet. Vorzugsweise liegt die Höhe H der beiden seitlichen Erhöhungen (5) jeweils in einem Bereich von 0,5 bis 2,5 cm, insbesondere von 1,0 bis 2,5 cm, am meisten bevorzugt von 1,5 bis 2,3 cm.

Vorzugsweise liegt die Dicke D1 des Grundkörpers (2) und die Dicke D2 der seitlichen Erhöhungen (5) jeweils unabhängig voneinander in einem Bereich von 1 mm bis 2,5 mm.

Vorzugsweise besteht die Vorrichtung (1) aus dem ebenen Grundkörper (2), welcher die beiden seitlichen Erhöhungen (5) sowie einen Griff (7) und/oder eine Aussparung (8) aufweist. Griff (7) und/oder Aussparung (8) dienen dabei dazu, der Person, die mit der Befüllung bzw. Beladung der Vorrichtung (1) mit einem oder mehreren Lebensmittel(n) betraut ist, das Handling mit der Vorrichtung (1) zu erleichtern.

Vorzugsweise ist der ebene Grundkörper (2) so ausgestaltet, dass er eine vorzugsweise kreisförmige Aussparung (8) und/oder einen Griff (7) mit einer vorzugsweise kreisförmigen Aussparung (8) aufweist.

Vorzugsweise ist Griff (7) und/oder Aussparung (8) der Vorrichtung an oder im Bereich der vorgenannten Seite (10) des Grundkörpers angeordnet. Der Griff (7) kann die Form eines Dreieckes aufweisen, in das die Aussparung (8) eingelassen ist, wobei die Seite (10) in diesem Fall vorzugsweise die längste Seite des Dreiecks darstellt.

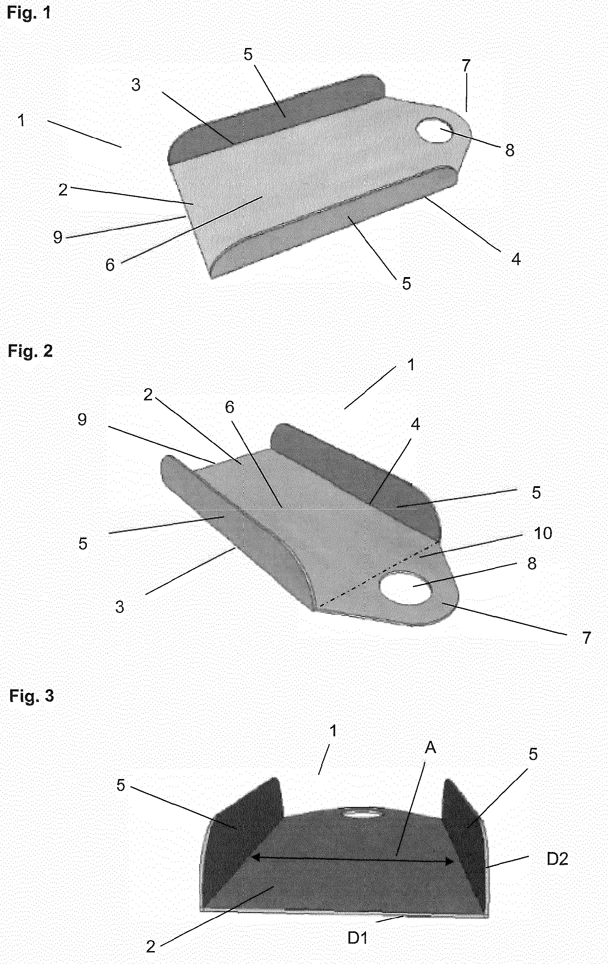

**Fig. 1, Fig. 2** und **Fig. 3** zeigen jeweils eine schematische 3D-Draufsicht einer beispielhaften Ausgestaltung der erfindungsgemäßen Vorrichtung (1) aus unterschiedlichen Perspektiven.

Anhand von **Fig. 2** ist ersichtlich, dass die darin abgebildete exemplarische Vorrichtung (1) einen Grundkörper (2) aufweist, der die Form einer Platte hat. Der Grundkörper weist zwei Seiten (3) und (4) auf, die den Grundkörper begrenzen. An den Seiten (3) und (4) befindet sich jeweils über die gesamte Länge der Seiten eine seitliche Erhöhung (5). Der ebene Grundkörper (2) umfasst eine zentrale Fläche (6), die durch die Länge L der beiden seitlichen Erhöhungen (5) und durch den Abstand A der beiden Erhöhungen (5) voneinander definiert ist. Der Grundkörper weist zudem zwei weitere Seiten (9) und (10) auf, die sich wie auch die Seiten (3) und (4) gegenüberliegen und parallel zueinander angeordnet sind. Jede der Seiten (9) und (10) ist orthogonal zu jeder der Seiten (3) und (4) angeordnet. Die Länge der Seite (9) ist dabei etwas größer als der Abstand A der beiden Erhöhungen (5) voneinander, da die Erhöhungen (5) jeweils eine bestimmte Dicke D2 aufweisen. Gleiches gilt für die Seite (10). Im Bereich der Seite (10) beinhaltet der Grundkörper einen Griff (7) der wiederum eine kreisförmige Aussparung (8) beinhaltet. In **Fig. 1** ist die gleiche exemplarische Vorrichtung (1) gemäß **Fig. 2** aus einer anderen Perspektive abgebildet. Aus Gründen der Übersichtlichkeit wurde die Seite (10) nicht eingezeichnet. In **Fig. 3** sind die Dicke D1 des Grundkörpers (2), die Dicke D2 der seitlichen Erhöhungen (5) sowie der Abstand A zwischen den beiden Erhöhungen (5) ersichtlich.

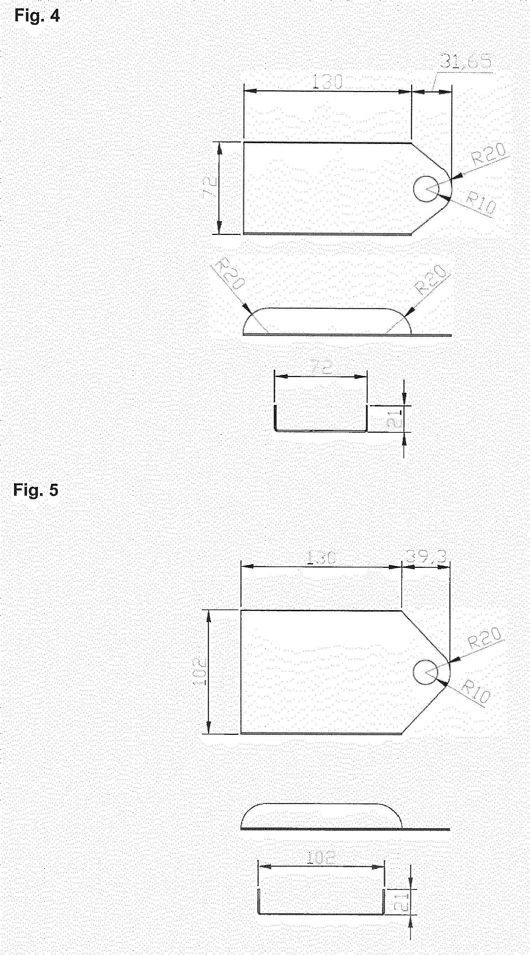

**Fig. 4, Fig. 5** und **Fig. 6** stellen jeweils technische Zeichnungen einer beispielhaften Ausgestaltung der erfindungsgemäßen Vorrichtung (1) in unterschiedlichen Größen dar.

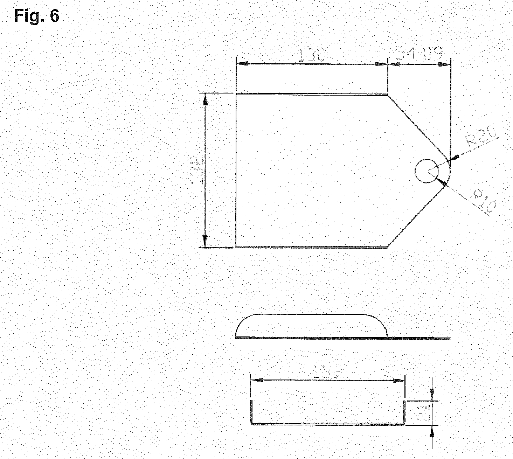

Die Vorrichtung gemäß **Fig. 4** ist dabei so ausgestaltet, dass die Länge der Seiten (3) und (4) bzw. die Länge L der seitlichen Erhöhungen (5) 13 cm beträgt. Die Länge der Seite (9) beträgt 7,2 cm. Die Höhe H der seitlichen Erhöhungen (5) beträgt höchstens 2,1 cm. Der im Bereich der Seite (10) des Grundkörpers (2) befindliche Griff (7) weist eine kreisförmige Aussparung (8) auf, die einen Durchmesser von 2 cm hat. Die Vorrichtung gemäß **Fig. 5** ist dabei so ausgestaltet, dass die Länge der Seiten (3) und (4) bzw. die Länge L der seitlichen Erhöhungen (5) 13 cm beträgt. Die Länge der Seite (9) beträgt 10,2 cm. Die Höhe H der seitlichen Erhöhungen (5) beträgt höchstens 2,1 cm. Der im Bereich der Seite (10) des Grundkörpers (2) befindliche Griff (7) weist eine kreisförmige Aussparung (8) auf, die einen Durchmesser von 2 cm hat. Die Vorrichtung gemäß **Fig. 6** ist dabei so ausgestaltet, dass die Länge der Seiten (3) und (4) bzw. die Länge L der seitlichen Erhöhungen (5) 13 cm beträgt. Die Länge der Seite (9) beträgt 13,2 cm. Die Höhe H der seitlichen Erhöhungen (5) beträgt höchstens 2,1 cm. Der im Bereich der Seite (10) des Grundkörpers (2) befindliche Griff (7) weist eine kreisförmige Aussparung (8) auf, die einen Durchmesser von 2 cm hat.

### Erfindungsgemäße Verwendung

Ein weiterer Gegenstand der vorliegenden Erfindung ist eine Verwendung der erfindungsgemäßen Vorrichtung (1) zur zumindest teilweisen Befüllung von Brottaschen mit einem oder mehreren Lebensmittel(n), insbesondere zur zumindest teilweisen Befüllung von Brottaschen mit Dönerfleisch, vorzugsweise in Kombination mit einem oder mehreren weiteren Lebensmittel(n).

Alle im Zusammenhang mit der erfindungsgemäßen Vorrichtung (1) hierin zuvor beschriebenen bevorzugten Ausführungsformen sind auch bevorzugte Ausführungsformen hinsichtlich der erfindungsgemäßen Verwendung der erfindungsgemäßen Vorrichtung (1).

### Erfindungsgemäßes Verfahren

Ein weiterer Gegenstand der vorliegenden Erfindung ist ein Verfahren zur zumindest teilweisen Befüllung von Brottaschen mit einem oder mehreren Lebensmittel(n) umfassend wenigstens einen Schritt (1), nämlich
(1) zumindest teilweise Befüllung wenigstens einer Brottasche mit einem oder mehreren Lebensmittel(n) unter Einsatz der erfindungsgemäßen Vorrichtung (1).

Alle im Zusammenhang mit der erfindungsgemäßen Vorrichtung (1) und ihrer Verwendung hierin zuvor beschriebenen bevorzugten Ausführungsformen sind auch bevorzugte Ausführungsformen hinsichtlich des erfindungsgemäßen Verfahrens zur zumindest teilweisen Befüllung von Brottaschen mit einem oder mehreren Lebensmittel(n).

Vorzugsweise wird Schritt (1) des erfindungsgemäßen Verfahrens in wenigstens drei Stufen (1a), (1b) und (1c) durchgeführt, nämlich durch
(1a) zumindest teilweise Befüllung der Vorrichtung (1) mit einem oder mehreren Lebensmittel(n),
(1b) zumindest teilweise Einführung der nach Durchführung von Stufe (1a) erhaltenen und mit einem oder mehreren Lebensmittel(n) befüllten Vorrichtung (1) in eine Brottasche und
(1c) Entfernen der Vorrichtung aus der Brottasche, wobei das oder die Lebensmittel nach der Entfernung der Vorrichtung (1) im Wesentlichen in der Brottasche verbleibt bzw. verbleiben.

Stufe (1a) stellt eine Beladung der Vorrichtung (1) mit einem oder mehreren Lebensmittel(n) dar.

Der Begriff "im Wesentlichen" bedeutet in diesem Zusammenhang im Sinne der vorliegenden Erfindung vorzugsweise, dass das oder die Lebensmittel nach der Entfernung der Vorrichtung (1) nahezu vollständig in der Brottasche verbleibt bzw. verbleiben. Es ist dabei möglich, dass einzelne Bestandteile wie Salatblätter, Soße und/oder kleinere Fleischstücke in geringem Maße in der Vorrichtung (1) verbleiben, d.h. die Befüllung nicht vollständig in die Brottasche transferiert wird, beispielsweise durch Anhaftung einiger Lebensmittel an die Fläche (6) und/oder die Erhöhungen (5) des Grundkörpers (2) der Vorrichtung (1). Vorzugsweise verbleiben wenigstens 90 Gew.-%, insbesondere wenigstens 95 Gew.-% oder wenigstens 98 Gew.-% aller transferierten Lebensmittel in der Brottasche, bezogen auf das Gesamtgewicht der transferierten Lebensmittel.

Vorzugsweise erfolgt nach Durchführung von Stufe (1b) und noch vor der Durchführung von Stufe (1c) eine Rotation der befüllten Brottasche einschließlich der zu diesem Zeitpunkt darin befindlichen Vorrichtung (1) um bis zu 180°, und die Entfernung gemäß Stufe (1c) wird im Anschluss an diese Rotation durchgeführt.

Vorzugsweise erfolgt die Befüllung gemäß Stufe (1a) derart, dass alle eingesetzten Lebensmittel bereits während der Befüllung durchmischt werden. Auf diese Art und Weise kann erreicht werden, dass innerhalb der Vorrichtung (1) und insbesondere innerhalb der befüllten Fläche (6) ihres Grundkörpers (2) an jeder Position eine homogene Mischung aller Bestandteile vorliegt. Alternativ kann eine solche Durchmischung auch nach der Befüllung gemäß Stufe (1a) und noch vor Durchführung von Stufe (1b) erfolgen.

### Kit-of-parts

Ein weiterer Gegenstand der vorliegenden Erfindung ist ein Kit-of-parts umfassend eine erfindungsgemäße Vorrichtung (1) und eine Brottasche, die zur zumindest teilweisen Aufnahme einer mit einem oder mehreren Lebensmittel(n) befüllten erfindungsgemäßen Vorrichtung (1) geeignet ist.

Alle im Zusammenhang mit der erfindungsgemäßen Vorrichtung (1) und ihrer Verwendung sowie dem erfindungsgemäßen Verfahren hierin zuvor beschriebenen bevorzugten Ausführungsformen sind auch bevorzugte Ausführungsformen hinsichtlich des erfindungsgemäßen Kit-of-parts.

Die eingesetzte Brottasche, die zur zumindest teilweisen Aufnahme einer mit einem oder mehreren Lebensmittel(n) befüllten erfindungsgemäßen Vorrichtung (1) geeignet ist, ist vorzugsweise eine dreiseitig verschlossene Brottasche, d.h. eine Brottasche, die genau eine Öffnung aufweist, in die die befüllte erfindungsgemäße Vorrichtung (1) eingeführt werden kann. Vorzugsweise hat die eingesetzte Brottasche eine weitestgehend rechteckige, besonders bevorzugt eine rechteckige Form. Die eingesetzte Brottasche ist grundsätzlich aus jeder Art von Brot herstellbar. Nachdem das Brot gebacken worden ist, wird es vorzugsweise an einer Seite in seiner Breite aufgeschnitten oder es wird der Knust des Brotes entfernt. Auf diese Art und Weise kann eine dreiseitig verschlossene Brottasche erhalten werden. Es ist möglich, die so einseitig geöffnete Brottasche direkt zwecks Befüllung einzusetzen. Es ist aber ebenfalls möglich, die Brottasche optional einer partiellen Aushöhlung nach ihrer einseitigen Öffnung zu unterwerfen, um das Volumen innerhalb der Brottasche zu vergrößern und die Einführung der erfindungsgemäßen Vorrichtung (1) in die Brottasche zu erleichtern.

## Patentansprüche

1. Eine Vorrichtung (1) zur zumindest teilweisen Befüllung von Brottaschen mit einem oder mehreren Lebensmittel(n), wobei die Vorrichtung (1)
einen ebenen Grundkörper (2) umfasst, der an zwei sich gegenüberliegenden und parallel zueinander angeordneten Seiten (3) und (4) jeweils über die gesamte Länge L jeder dieser Seiten (3) und (4) eine seitliche Erhöhung (5) aufweist,
der ebene Grundkörper (2) eine zentrale Fläche (6) beinhaltet, die durch die Länge L der beiden seitlichen Erhöhungen (5) und durch den Abstand A der beiden Erhöhungen (5) voneinander definiert ist, und
der ebene Grundkörper (2) so ausgestaltet ist, dass er einen Griff (7) und/oder eine Aussparung (8) aufweist.

2. Die Vorrichtung gemäß Anspruch 1, **dadurch gekennzeichnet, dass** sie zur zumindest teilweisen Befüllung von Brottaschen mit Dönerfleisch, vorzugsweise in Kombination mit einem oder mehreren weiteren Lebensmittel(n), geeignet ist.

3. Die Vorrichtung gemäß Anspruch 1 oder 2, **dadurch gekennzeichnet, dass** der Grundkörper (2) einschließlich seiner seitlichen Erhöhungen (5) aus wenigstens einem Metall und/oder aus wenigstens einer Metalllegierung besteht.

4. Die Vorrichtung gemäß einem der vorstehenden Ansprüche, **dadurch gekennzeichnet, dass** die Vorrichtung (1) ganzheitlich aus einem Material und aus genau einem Werkstück gefertigt ist.

5. Die Vorrichtung gemäß einem der vorstehenden Ansprüche, **dadurch gekennzeichnet, dass** jede der Seiten (3) und (4) eine Länge L aufweist, die mindestens 90% des Abstands A entspricht.

6. Die Vorrichtung gemäß einem der vorstehenden Ansprüche, **dadurch gekennzeichnet, dass** der Grundkörper (2) so ausgestaltet ist, dass die seitlichen Erhöhungen (5) jeweils in einem Winkel zur Fläche (6) angeordnet sind, der in einem Bereich von 85 bis 95° liegt.

7. Die Vorrichtung gemäß einem der vorstehenden Ansprüche, **dadurch gekennzeichnet, dass** der ebene Grundkörper (2) so ausgestaltet ist, dass er einen Griff (7) umfassend eine vorzugsweise kreisförmige Aussparung (8) aufweist.

8. Die Vorrichtung gemäß einem der vorstehenden Ansprüche, **dadurch gekennzeichnet, dass** die zentrale Fläche (6) des Grundkörpers (2) rechteckig oder quadratisch ist.

9. Die Vorrichtung gemäß einem der vorstehenden Ansprüche, **dadurch gekennzeichnet, dass** die Dicke D1 des Grundkörpers (2) und die Dicke D2 der seitlichen Erhöhungen (5) jeweils in einem Bereich von 1 mm bis 2,5 mm liegt.

10. Die Vorrichtung gemäß einem der vorstehenden Ansprüche, **dadurch gekennzeichnet, dass** die Höhe H der beiden seitlichen Erhöhungen (5) höchstens 2,5 cm beträgt.

11. Eine Verwendung der Vorrichtung (1) gemäß einem der vorstehenden Ansprüche zur zumindest teilweisen Befüllung von Brottaschen mit einem oder mehreren Lebensmittel(n), insbesondere zur zumindest teilweisen Befüllung von Brottaschen mit Dönerfleisch, vorzugsweise in Kombination mit einem oder mehreren weiteren Lebensmittel(n).

12. Ein Verfahren zur zumindest teilweisen Befüllung von Brottaschen mit einem oder mehreren Lebensmittel(n) umfassend wenigstens einen Schritt (1), nämlich
(1) zumindest teilweise Befüllung wenigstens einer Brottasche mit einem oder mehreren Lebensmittel(n) unter Einsatz der Vorrichtung (1) gemäß einem der Ansprüche 1 bis 10.

13. Das Verfahren gemäß Anspruch 12, **dadurch gekennzeichnet, dass** Schritt (1) in wenigstens drei Stufen (1a), (1b) und (1c) durchgeführt wird, nämlich durch (1a)
zumindest teilweise Befüllung der Vorrichtung (1) mit einem oder mehreren Lebensmittel(n),
(1b) zumindest teilweise Einführung der nach Durchführung von Stufe (1a) erhaltenen und mit einem oder mehreren Lebensmittel(n) befüllten Vorrichtung (1) in eine Brottasche und
(1c) Entfernen der Vorrichtung aus der Brottasche, wobei das oder die Lebensmittel nach der Entfernung der Vorrichtung (1) im Wesentlichen in der Brottasche verbleibt bzw. verbleiben.

14. Das Verfahren gemäß Anspruch 13, **dadurch gekennzeichnet, dass** nach Durchführung von Stufe (1b) und noch vor der Durchführung von Stufe (1c) eine Rotation der befüllten Brottasche einschließlich der zu diesem Zeitpunkt darin befindlichen Vorrichtung (1) um bis zu 180° erfolgt, und die Entfernung gemäß Stufe (1c) im Anschluss an diese Rotation durchgeführt wird.

15. Ein Kit-of-parts umfassend eine Vorrichtung (1) gemäß einem der Ansprüche 1 bis 10 und eine Brottasche, die zur zumindest teilweisen Aufnahme einer mit einem oder mehreren Lebensmittel(n) befüllten Vorrichtung (1) geeignet ist.
